# EUROPÄISCHE PATENTSCHRIFT

(11) **EP 1 720 783 B1**
(45) Veröffentlichungstag und Bekanntmachung des Hinweises auf die Patenterteilung: **07.07.2010**
(21) Anmeldenummer: 05715696.0
(22) Anmeldetag: 03.03.2005
(51) Int. Cl.: B65G 69/16, B65G 11/14, B30B 15/30

(54) **VERWENDUNG EINER FÖRDERVORRICHTUNG MIT VERTIKALER EINFÜLLVORRICHTUNG ZUR BEFÜLLUNG EINER TABLETTENPRESSE**
USE OF A TRANSPORT DEVICE COMPRISING A VERTICAL FILLING DEVICE FOR FILLING A TABLET COMPACTOR
UTILISATION D'UN DISPOSITIF D'ACHEMINEMENT AYANT UN DISPOSITIF DE REMPLISSAGE VERTICAL POUR LE REMPLISSAGE D'UNE PRESSE À COMPRIMÉS

(30) Priorität: 04.03.2004 DE 202004003558 U
(43) Veröffentlichungstag der Anmeldung: 15.11.2006
(73) Patentinhaber: Hexal AG, 83607 Holzkirchen (DE)
(72) Erfinder: RILLMANN, Thomas, 76753 Bellheim (DE)
(74) Vertreter: Boeters, Hans Dietrich
(86) Internationale Anmeldenummer: PCT/EP2005/002241
(87) Internationale Veröffentlichungsnummer: WO 2005/085106

(56) Entgegenhaltungen:
- EP-A- 0 304 020
- DE-A1- 10 324 715
- FR-A- 2 562 525
- US-A- 5 016 686
- US-B1- 6 183 232

## Beschreibung

Die Erfindung betrifft die Verwendung einer Fördervorrichtung mit einer Einfüllvorrichtung zum entmischungsfreien vertikalen Materialfluss von pulverförmigen Medien mit unterschiedlichen Partikelgrößen und unterschiedlichen Partikeldichten.

Derartige Fördervorrichtungen mit Einfüllvorrichtungen dienen dazu, bei Tablettierprozessen die zu tablettierende Pressmasse vom Vorratsbehälter, der sich über einer Tablettenpresse befindet, vertikal in einen Füllschuh der Tablettenpresse zu überführen. Dazu weisen herkömmlich Fördervorrichtungen vertikale Rohr- oder Schlauchsysteme auf, die unterhalb des Vorratsbehälters angeordnet sind. Bei derartigen Fördersystemen besteht beim Öffnen des Vorratsbehälters die Gefahr, dass das zu tablettierende Gut zunächst im freien Fall bis zu dem Füllschuh fällt, bis das Rohr bzw. der Schlauch vollständig gefüllt ist. Dabei kann es nachteilig, insbesondere bei Pressmassen aus Komponenten mit unterschiedlichen Partikelgrößen und unterschiedlichen Partikeldichten, zu einer Entmischung kommen. Somit treten im anschließenden Tablettierprozess Inhomogenitäten bei den hergestellten Tabletten auf. Dieses beeinträchtigt die Qualität und die Zusammensetzung der Tabletten und hat gravierende Folgen für die Medikamentierung für den Endverbraucher.

US 5,016,686 offenbart ein Verfahren, sowie eine Vorrichtung zum Beladen von teilchenförmigem Material, wobei die Vorrichtung eimen Einlauftrichter, Teleskopelemente und eimen Auslauftrichter aufweist.

Aufgabe der Erfindung ist es, die Lehre von DE 103 24 715 weiter zu verbessern und eine Fördervorrichtung mit einer Einfüllvorrichtung zu verwenden, die geeignet ist, einen entmischungsfreien vertikalen Materialfluss von pulverförmigen Medien mit unterschiedlichen Partikelgrößen und unterschiedlichen Partikeldichten zu gewährleisten.

Gelöst wird diese Aufgabe mit dem Gegenstand des Anspruchs 1. Vorteilhafte Weiterbildungen der Erfindung ergeben sich aus den abhängigen Ansprüchen.

Erfindungsgemäß wird eine Vorrichtung mit einer Einfüllvorrichtung zum entmischungsfreien vertikalen Materialfluss von pulverförmigen Medien mit unterschiedlichen Partikelgrößen und unterschiedlichen Partikeldichten verwendet, wobei die Fördervorrichtung einen Vorratsbehälter aufweist, der vertikal über einer Tablettenpresse angeordnet ist.

Dieser Vorratsbehälter weist eine untere Öffnung auf, an welche die Einfüllvorrichtung ankoppelbar ist. Die Einfüllvorrichtung weist ihrerseits einen Einlauftrichter mit einer oberen Einlauföffnung auf, die an die untere Öffnung des Vorratsbehälters ankoppelbar ist. Darüber hinaus weist der Einlauftrichter eine untere Auslauföffnung auf, die von einem Trichterrohr gebildet wird, und einen geringeren Durchmesser aufweist, als die obere Einlauföffnung. Auf dem Trichterrohr sind Teleskopelemente und ein Auslauftrichter angeordnet, der eine Auslaufklappe aufweist.

Der Vorratsbehälter kann verschließbar ausgebildet sein. Dazu kann eine Klappe vorgesehen sein, mit der die untere Behälteröffnung verschlossen werden kann. Die Klappe kann um eine Achse schwenkbar ausgebildet sein.

In einem zusammengeschobenen Zustand der Teleskopelemente ist die Auslaufklappe des Auslauftrichters geschlossen und kann erst geöffnet werden, wenn die Teleskopelemente auseinander gezogen sind und ein Mundstück, das den unteren Bereich des Auslauftrichters umgibt, mit dem darunter angeordneten Füllschuh verbunden ist.

In einer bevorzugten Ausführungsform der Erfindung sind die Innendurchmesser und die Außendurchmesser der Teleskopelemente derart aufeinander abgestimmt, dass sie eine Gleitpassung aufweisen. Diese hat den Vorteil, dass die zusammengeschobenen Teleskopelemente von einem zusammengeschobenen Zustand zu einem ausgezogenen Zustand ohne Probleme auseinander gezogen werden können.

Bei einer möglichen Ausführungsform kann von Dichtelementen wie Dichtringen abgesehen werden.

Weiterhin kann vorgesehen sein, dass die Teleskopelemente, die eine Gleitpassung aufweisen können, und der Auslauftrichter auf ihren Innenflächen jeweils mindestens einen Dichtring im Bereich ihrer oberen Ränder aufweisen. Dieser Dichtring im Bereich der oberen Ränder von Teleskopelementen und Auslauftrichter kann in einer Ringaussparung der jeweiligen Innenwand angeordnet sein. Das hat den Vorteil, dass beim Auseinanderziehen der Teleskopelemente zu einem langgestreckten Teleskoprohr, dieses Teleskoprohr gegenüber der Umgebung abgedichtet bleibt und kein Material aus dem Teleskoprohr im ausgezogenem Zustand entweichen kann.

In einer weiteren Ausführungsform der Erfindung ist es vorgesehen, dass das Trichterrohr des Einlauftrichters und die Teleskopelemente, die eine Gleitpassung aufweisen können, jeweils mindestens einen Dichtring im Bereich ihrer unteren Ränder aufweisen. Diese Dichtringe können in entsprechenden Ringaussparungen der jeweiligen Außenwände angeordnet sein. Das hat den Vorteil, dass sich kein Material aus dem Materialfluss in die Spalte der Gleitpassung absetzen kann. Ferner wird die Verschieblichkeit der Teleskopelemente untereinander und der Teleskopelemente in Bezug auf die Außenwand des Einlauftrichters und die Innenwand des Auslauftrichters nicht durch Ablagerung behindert.

Dazu können die Dichtringe Dichtlippen aufweisen, die dichtend an den Innenwänden beziehungsweise Außenwänden gleitend anliegen.

Weiterhin kann vorgesehen sein, dass sowohl Dichtelemente, etwa in Form von Dichtringen oder Dichtlippen, im Bereich der unteren Ränder als auch im Bereich der oberen Ränder, vorgesehen sind, so dass jeder Passspalt zwischen den gleitverschieblichen Teleskopelementen, die eine Gleitpassung aufweisen können, sowie zwischen der Außenwand des Trichterrohres des Einlauftrichters und der Innenwand des Auslauftrichters doppelt abgedichtet ist.

Das Mundstück im unteren Bereich des Auslauftrichters ist derart gestaltet, dass es an den Füllschuh der Tablettenpresse andockbar ist. Dazu weist das Mundstück ein gummielastisches Mantelrohr auf, das mit seinem Außendurchmesser eine Dichtpassung zu einer Öffnung des Füllschuhs der Tablettenpresse ermöglicht.

Um den Auslauftrichter in dem zusammengeschobenen Zustand der Teleskopelemente geschlossen zu halten, weist die Auslaufklappe, die im Auslauftrichter angeordnet ist und die Auslauföffnung des Auslauftrichters verschließen kann, eine Drehachse auf, um welche die Auslaufklappe im Inneren des Auslauftrichters drehbar ist. An der Auslaufklappe ist ein außerhalb des Auslauftrichters angeordnetes Betätigungselement angeordnet. Ein derartiges Betätigungselement kann derart konstruiert sein, dass die Außenklappe automatisch verschlossen bleibt, wenn die Teleskopelemente den zusammengefahrenen Zustand erreichen. Ferner kann das Bestätigungselement derart konstruiert sein, dass es die Auslaufklappe erst entriegelt und zum Öffnen freigibt, wenn das Mundstück sicher in einer Öffnung des Füllschuhs angeordnet ist.

Weiterhin ist es vorgesehen, dass der Auslauftrichter einen Griff aufweist, der auf der Außenfläche des Auslauftrichters angeordnet ist. Durch diesen Griff ist es vorteilhaft möglich, die Teleskopelemente auseinander zu ziehen und ineinander zu schieben, sowie das Mundstück nach einem Auseinanderziehen an den Füllschuh anzudocken.

Dieser Griff kann mit einer automatischen Einführ- bzw. Betätigungsvorrichtung zusammenwirken und/oder von einem Bedienpersonal bedient werden.

Zusammenfassend ist festzustellen, dass der besondere Vorteil der Teleskop-Einfüllvorrichtung darin besteht, dass Pressmassen mit Komponenten mit unterschiedlicher Partikelgröße und unterschiedlicher Partikeldichte entmischungsfrei von dem Vorratsbehälter in den Füllschuh gefördert werden. Bei Öffnung des Vorratsbehälters ist das Teleskoprohr aus Teleskopelementen zunächst vollständig zusammengeschoben. Nach Öffnung des Vorratsbehälters wird das Teleskoprohr bei geschlossener Auslaufklappe langsam an dem Griff nach unten geführt, wodurch ein freier Fall des pulverförmigen Mediums mit der Zusammensetzung der späteren Pressmasse und eine Entmischung des pulverförmigen Mediums verhindert wird. Erst nach dem Andocken an den Füllschuh der Tablettenpresse wird dann die Auslaufklappe der Einfüllvorrichtung im unteren Bereich des Auslauftrichters geöffnet.

Die Erfindung wird nun anhand der beigefügten Figuren näher erläutert.
- Figur 1: zeigt eine Fördervorrichtung mit Einfüllvorrichtung, die gemäß einer Ausführungsform der Erfindung verwendbar ist, nach An- docken der Einfüllvorrichtung an einen Vorratsbehäl- ter.
- Figur 2: zeigt eine Fördervorrichtung mit Einfüllvorrichtung gemäß Figur 1, nach Andocken der Einfüllvorrichtung an einen Füllschuh.

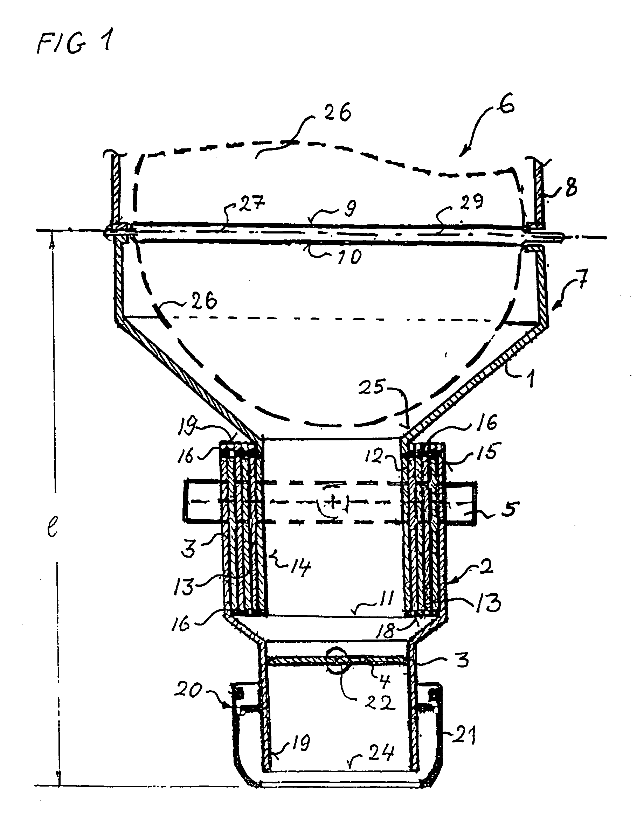

Figur 1 zeigt eine Fördervorrichtung 6 mit Einfüllvorrichtung 7, die gemäß einer Ausführungsform der Erfindung verwendbar ist, nach Andocken der Einfüllvorrichtung 7 an einen Vorratsbehälter 8. Der Vorratsbehälter 8 weist eine untere Öffnung 9 auf, an die ein Einlauftrichter 1 mit seiner oberen Öffnung 10 angekoppelt ist. Die untere Öffnung 9 des Vorratsbehälters 8 ist mit einer Klappe 26 verschließbar, indem die Klappe 26, deren Kontur mit einer gestrichelten Linie dargestellt ist, um die Achse 27 geschwenkt wird. In der hier mit der gestrichelten Linie gezeigten Stellung ist die Klappe 26 in einer geöffneten Position.

Der Einlauftrichter 1 dient gleichzeitig zur Aufnahme eines Teleskoprohres 2, das in Figur 1 in zusammengeschobenen Zustand gezeigt wird. Dieses Teleskoprohr 2 besteht in dieser Ausführungsform aus vier Teleskopelementen 13, die mit ihren abgestuften Durchmessern gleitverschieblich ineinander geschoben sind. Das innerste Teleskopelement 13 ist gleitverschieblich auf der Außenwand eines Trichterrohrs 12 angeordnet, das mit dem Einlauftrichter 1 fest verbunden ist, und auf seiner Außenwand das zusammengeschobene Teleskoprohr 2 trägt.

Das Trichterrohr 12 weist einen Auslauföffnung 11 auf, die kleiner ist als die Einlauföffnung 10 auf der Oberseite des Einlauftrichters 1. Die Innenkontur 25 des Einlauftrichters 1 ist in dieser Ausführungsform trichterförmig gebildet, und kann auch eine Kegelstumpfform aufweisen. Die ineinandergeschobenen Teleskopelemente 13 werden von außen einem Auslauftrichter 3 umgeben, der in seinem unteren Bereich 19 eine Einfüllöffnung 24 aufweist, die geringfügig größer als die Auslauföffnung 11 des Trichterrohres 12 des Einlauftrichters 1, ist. Die Einfüllöffnung 24 des Auslauftrichters 3 ist in dem zusammengefahrenen Zustand des Teleskoprohres 2 durch eine Auslaufklappe 4, die um die Achse 22 drehbar ist, geschlossen.

Somit kann, nach Andocken der Einfüllvorrichtung 7 an den Vorratsbehälter 8, das zu fördernde pulverförmige Medium den Einlauftrichter 1 in dem Auslauftrichter 3 nur bis zur Auslaufklappe 4 auffüllen. Der Auslauftrichter 3 weist außerhalb des Füllvolumens einen Griff 5 auf, der mit der Außenwand des Auslauftrichters 3 verbunden ist, und der das Teleskoprohr 2 beim Ausziehen und beim Zusammenschieben der Teleskopelemente 13 führt. Im unteren Bereich 19 des Auslauftrichters 3 ist darüber hinaus ein Mundstück 20 angeordnet, das ein gummielastisches Mantelrohr 21 aufweist, das mit einem Rohransatz des Füllschuhes verbindbar ist.

Die Gesamtlänge 1 der zusammengeschobenen Einfüllvorrichtung 7 ist in dieser Ausführungsform der Erfindung etwa 30 cm und die Einlauföffnung 10 hat einen Durchmesser von etwa 25 cm, während der Durchmesser der Auslauföffnung 11 etwa 9 cm beträgt. Die Einfüllöffnung 24 am Ende des Auslauftrichters 3 hat einen Durchmesser von etwa 10 cm, der gleichzeitig auch dem Durchmesser der Auslaufklappe 4 entspricht. Da die Einfüllöffnung 24 geringfügig größer als die Auslassöffnung 11 ist, wird gewährleistet, dass beim Übergang von dem Auslauftrichter 3 zu dem Füllschuh kein Medienstau auftritt. Die Auslaufklappe 4 weist lediglich eine spezielle Ausführungsform auf. Alternative Ausführungsformen der Auslaufklappe 4 können z. B. zwei Bügel aufweisen, die zum Öffnen aufeinander zu geschwenkt werden, und dabei in entgegengesetzte Richtungen um die Achse 22 gedreht werden.

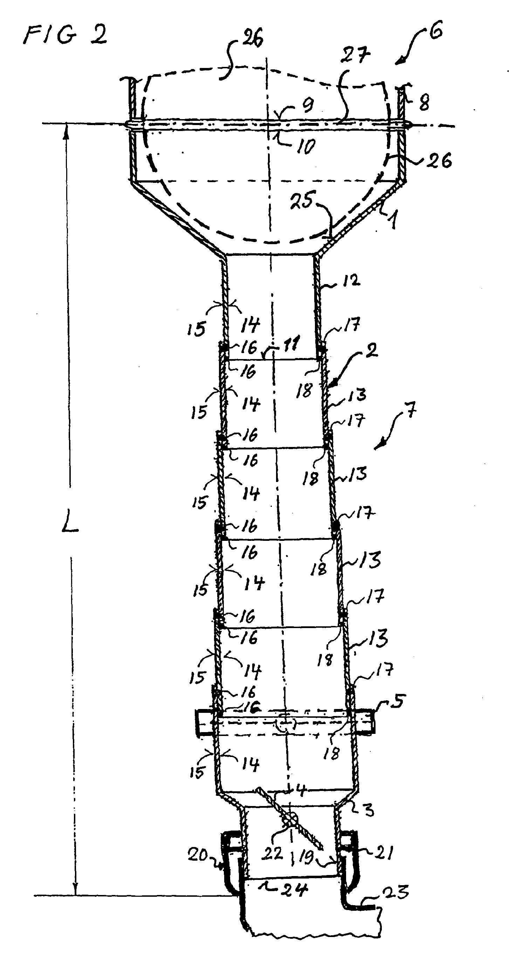

**Figur 2** zeigt die Fördervorrichtung 6 mit Einfüllvorrichtung 7 gemäß **Figur 1****,** nach Andocken der Einfüllvorrichtung 7 an den Füllschuh 23. Komponenten mit gleichen Funktionen, wie in **Figur 1****,** werden mit gleichen Bezugszeichen gekennzeichnet und nicht extra erörtert.

Zum Andocken der Einfüllvorrichtung 7 an den Füllschuh 23 wurde mit Hilfe des Griffes 5 das Teleskoprohr 2 auseinander gezogen, so dass die Einfüllvorrichtung 7 nun eine Länge L von etwa 75 cm aufweist und an den vertikal unterhalb des Vorratsbehälters 8 angeordneten Füllschuh 23 mit dem Mundstück 20 der Einfüllvorrichtung 7 angedockt werden kann. Um die vier Teleskopelemente 13 zueinander und gegenüber dem Einlauftrichter 1 und dem Auslauftrichter 3 abzudichten, sind entsprechende Dichtringe 16 an den oberen und unteren Rändern 17 und 18 der Teleskopelemente 13 vorgesehen. Dazu weisen das Trichterrohr 12 des Einlauftrichters 1 und die Teleskopelemente 13 jeweils mindestens einen Dichtring 16 im Bereich ihrer unteren Ränder 18 auf. Der Dichtring 16 ist dazu in einer Ringaussparung der jeweiligen Außenflächen 15 von Trichterrohr 12 und Teleskopelementen 13 angeordnet.

Ein weiterer Dichtring 16 ist an den oberen Rändern 17 der Teleskopelemente 13 und des Auslauftrichters 3 angeordnet, wobei dazu die Innenflächen 14 eine Ringaussparung an der jeweiligen Innenfläche 14 aufweist, um den Dichtring 16 auf zunehmen. Somit ist der Spalt zwischen den Teleskopelementen 13 untereinander und dem Trichterrohr 12 des Einlauftrichters 1 und der Innenfläche 14 des Auslauftrichters 3 durch jeweils zwei Dichtringe 16 gesichert. Wie **Figur 2** zeigt, ist die Auslaufklappe 4 bei angedocktem Teleskoprohr 2 an den Füllschuh 23 in einer geöffneten Position. In diese Position kann die Auslaufklappe 4 um die Achse 22 von außerhalb der Einfüllvorrichtung 7 mit Hilfe eines Betätigungselements gedreht werden.

### Bezugszeichenliste

- 1: Einlauftrichter
- 2: Teleskoprohr
- 3: Auslauftrichter
- 4: Auslaufklappe
- 5: Griff
- 6: Fördervorrichtung
- 7: Einfüllvorrichtung
- 8: Vorratsbehälter
- 9: untere Öffnung des Vorratsbehälter
- 10: Einlauföffnung des Einlauftrichters
- 11: Auslauföffnung
- 12: Trichterrohr
- 13: Teleskopelement
- 14: Innenfläche der Teleskopelemente
- 15: Außenflächen
- 16: Dichtring
- 17: obere Ränder
- 18: untere Ränder
- 19: unterer Bereich des Auslauftrichters
- 20: Mundstück
- 21: gummielastisches Mantelrohr
- 22: Achse der Auslaufklappe
- 23: Füllschuh
- 24: Einfüllöffnung
- 25: Innenkontur
- 26: Klappe
- 27: Achse

- 1: Länge der zusammengeschobenen Einfüllvorrichtung
- L: Lange der auseinandergezogenen Einfüllvorrichtung

## Patentansprüche

1. Verwendung einer Fördervorrichtung mit einer Einfüllvorrichtung (7), die folgende Merkmale aufweist:
- einen Vorratsbehälter (8) mit einer unteren Öffnung (9), an welche die Einfüllvorrichtung (7) ankoppelbar ist;
- einen Einlauftrichter (1) mit einer oberen Einlauföffnung (10) und einer unteren Auslauföffnung (11) eines Trichterrohres (12), wobei die Einlauföffnung (10) an die untere Öffnung (9) des Vorratsbehälters (8) ankoppelbar ist;
- Teleskopelemente (13), die auf dem Trichterrohr (12) angeordnet sind, und einen Auslauftrichter (3) mit einer Auslaufklappe (4) tragen,
zum entmischungsfreien vertikalen Materialfluss von pulverförmigen Medien mit unterschiedlichen Partikelgrössen und unterschiedlichen Partikeldichten, zur Befüllung einer Tablettenpresse, wobei die zu tablettierende pulverförmige Pressmasse mit unterschiedlichen Partikelgrössen und unterschiedlichen Partikeldichten entmischungsfrei aus einem über einer Tablettenpresse angeordneten Vorratsbehälter (8) vertikal unter Ausziehen der Teleskopelemente (13) bei geschlossener Auslaufklappe (4) in einen Füllschuh (23) der Tablettenpresse unter Öffnen der Auslaufklappe (4) geleitet wird.

2. Verwendung nach Anspruch 1, wobei die Fördervorrichtung **dadurch gekennzeichnet ist, dass** der Vorratsbehälter (8) verschliessbar ausgebildet ist.

3. Verwendung nach Anspruch 1 oder 2, wobei die Fördervorrichtung durch eine Klappe (26) als Verschluss des Vorratsbehälters (8) **gekennzeichnet** ist.

4. Verwendung nach Anspruch 3, wobei die Fördervorrichtung durch eine Schwenkachse (27) für die Klappe (28) **gekennzeichnet** ist.

5. Verwendung nach mindestens einem der vorhergehenden Ansprüche, wobei die Fördervorrichtung **dadurch gekennzeichnet ist, dass** Innendurchmesser und Aussendurchmesser der Teleskopelemente (13) derart aufeinander abgestimmt sind, dass sie eine Gleitpassung aufweisen.

6. Verwendung nach mindestens einem der vorhergehenden Ansprüche, wobei die Fördervorrichtung **dadurch gekennzeichnet ist, dass** die Teleskopelemente (13) und der Auslauftrichter (3) auf ihren Innenflächen (14) jeweils mindestens einen Dichtring (16) im Bereich ihrer oberen Ränder (17) aufweisen, der in einer Ringaussparung der jeweiligen Innenwand (14) angeordnet ist.

7. Verwendung nach mindestens einem der Ansprüche 1 bis 5, wobei die Fördervorrichtung **dadurch gekennzeichnet ist, dass** das Trichterrohr (12) und die Teleskopelemente (13) jeweils mindestens einen Dichtring (16) im Bereich ihrer unteren Ränder (18) aufweisen, der in einer Ringaussparung der jeweiligen Aussenwände (15) angeordnet ist.

8. Verwendung nach mindestens einem der vorhergehenden Ansprüche, wobei die Fördervorrichtung **dadurch gekennzeichnet ist, dass** das Trichterrohr (12) und die Teleskopelemente (13) jeweils mindestens einen Dichtring (16) im Bereich ihrer unteren Ränder (18) aufweisen, der in einer Ringaussparung der jeweiligen Aussenwände (15) angeordnet ist und die Teleskopelemente (13) und der Auslauftrichter (3) auf ihren Innenflächen (14) jeweils mindestens einen Dichtring (16) im Bereich ihrer oberen Ränder (17) aufweisen, der in einer Ringaussparung der jeweiligen Innenwand (14) angeordnet ist.

9. Verwendung nach mindestens einem der vorhergehenden Ansprüche, wobei die Fördervorrichtung **dadurch gekennzeichnet ist, dass** durch einen Griff (5), der auf der Aussenfläche (15) des Auslauftrichters (3) angeordnet ist, die Teleskopelemente (13) auseinander ziehbar und ineinander schiebbar sind.

10. Verwendung nach mindestens einem der vorhergehenden Ansprüche, wobei die Fördervorrichtung **dadurch gekennzeichnet ist, dass** der Auslauftrichter (3) in seinem unteren Bereich ein Mundstück (20) aufweist, das an den Füllschuh (23) der Tablettenpresse andockbar ist und ein gummielastisches Mantelrohr (21) aufweist.

11. Verwendung nach mindestens einem der vorhergehenden Ansprüche, wobei die Fördervorrichtung **dadurch gekennzeichnet ist, dass** die Auslaufklappe (4) um eine Achse (22) innerhalb des Auslauftrichters (3) drehbar und mit einem ausserhalb des Auslauftrichters (3) angeordneten Betätigungselement verstellbar ist.

12. Verwendung nach mindestens einem der vorhergehenden Ansprüche, wobei die Fördervorrichtung **dadurch gekennzeichnet ist, dass** die Auslaufklappe (4) im zusammengeschobenen Zustand der Teleskopelemente (13) und beim Auseinanderziehen der Teleskopelemente (13) geschlossen ist, und im auseinandergezogenen Zustand der Teleskopelemente (13) bei an den Füllschuh (23) angedocktem Mundstück (20) des Auslauftrichters (3) geöffnet ist.

## Claims

1. Use of a conveyor device having a filling device (7), having the following features:
- a supply container (8) having a lower opening (9) to which the filling device (7) can be coupled;
- an inlet hopper (1) having an upper inlet opening (10) and a lower outlet opening (11) of a guide tube (12), the inlet opening (10) being couplable to the lower opening (9) of the supply container (8);
- telescopic elements (13), which are arranged on the guide tube (12), and an outlet hopper (3) having an outlet flap (4),
for vertical flow of material, without demixing, of powdered media having different particle sizes and different particle densities, for filling a tablet press, wherein the powdered press mass to be tabletted having different particle sizes and different particle densities is guided vertically, without demixing, from a supply container (8), which is arranged above a tablet press, with the telescopic elements (13) being extended and the outlet flap (4) being closed, into a feed shoe (23) of the tablet press, with the outlet flap (4) being opened.

2. Use according to claim 1, wherein the conveyor device is **characterized in that** the supply container (8) is constructed so as to be closable.

3. Use according to claim 1 or 2, wherein the conveyor device is **characterized by** a flap (26) as closure of the supply container (8).

4. Use according to claim 3, wherein the conveyor device is **characterized by** a pivot axis (27) for the flap (28).

5. Use according to at least one of the preceding claims, wherein the conveyor device is **characterized in that** the internal diameters and external diameters of the telescopic elements (13) are so matched to one another that they have a sliding fit.

6. Use according to at least one of the preceding claims, wherein the conveyor device is **characterized in that** the telescopic elements (13) and the outlet hopper (3) each have on their inner surfaces (14) in the region of their upper edges (17) at least one sealing ring (16), which is arranged in an annular recess in the respective inner wall (14).

7. Use according to at least one of claims 1 to 5, wherein the conveyor device is **characterized in that** the guide tube (12) and the telescopic elements (13) each have in the region of their lower edges (18) at least one sealing ring (16), which is arranged in an annular recess in the respective outer walls (15).

8. Use according to at least one of the preceding claims, wherein the conveyor device is **characterized in that** the guide tube (12) and the telescopic elements (13) each have in the region of their lower edges (18) at least one sealing ring (16), which is arranged in an annular recess in the respective outer walls (15), and the telescopic elements (13) and the outlet hopper (3) each have on their inner surfaces (14) in the region of their upper edges (17) at least one sealing ring (16), which is arranged in an annular recess in the respective inner wall (14).

9. Use according to at least one of the preceding claims, wherein the conveyor device is **characterized in that** by means of a handle (5), which is arranged on the outer surface (15) of the outlet hopper (3), the telescopic elements (13) can be pulled out of one another and pushed one inside the other.

10. Use according to at least one of the preceding claims, wherein the conveyor device is **characterized in that** the outlet hopper (3) has, in its lower region, a mouthpiece (20) which can be docked to the feed shoe (23) of the tablet press and has a rubber-elastic tubular casing (21).

11. Use according to at least one of the preceding claims, wherein the conveyor device is **characterized in that** the outlet flap (4) is pivotable about an axis (22) inside the outlet hopper (3) and is displaceable by means of an operating element arranged outside the outlet hopper (3).

12. Use according to at least one of the preceding claims, wherein the conveyor device is **characterized in that** the outlet flap (4) is closed when the telescopic elements (13) are in the contracted position and while the telescopic elements (13) are being extended, and when the telescopic elements (13) are in the extended position the outlet flap (4) is open when the mouthpiece (20) of the outlet hopper (3) has been docked to the feed shoe (23).

## Revendications

1. Utilisation d'un dispositif d'acheminement ayant un dispositif de remplissage (7) qui présente les caractéristiques suivantes .
- un réservoir (8) avec une ouverture inférieure (9) à laquelle peut être couplé le dispositif de remplissage (7) ;
- une trémie d'entrée (1) avec une ouverture d'entrée (10) supérieure et une ouverture de sortie (11) inférieure d'un tube de trémie (12), l'ouverture d'entrée (10) pouvant être couplée à l'ouverture (9) inférieure du réservoir (8) ;
- des éléments télescopiques (13) qui sont disposés sur le tube de trémie (12) et portent une trémie de décharge (3) avec un clapet de sortie (4),
destiné au flux de matière vertical sans dissociation de moyens pulvérulents avec différentes tailles de particule et différentes densités de particule pour le remplissage d'une presse à comprimés, la matière à mouler pulvérulente à comprimer présentant différentes tailles de particule et différentes densités de particules étant conduite sans dissociation d'un réservoir (8) disposé au-dessus de la presse à comprimés verticalement en étirant les éléments télescopiques (13) lorsque le clapet de sortie (4) est fermé dans un sabot de remplissage (23) de la presse à comprimés en ouvrant le clapet de sortie (4).

2. Utilisation selon la revendication 1, le dispositif d'acheminement étant **caractérisé en ce que** le réservoir (8) est réalisé de manière à pouvoir être fermé.

3. Utilisation selon la revendication 1 ou 2, le dispositif d'acheminement étant **caractérisé par** un clapet (26) servant d'obturateur du réservoir (8).

4. Utilisation selon la revendication 3, le dispositif d'acheminement étant **caractérisé par** un axe de pivotement (27) pour le clapet (28).

5. Utilisation selon au moins l'une quelconque des revendications précédentes, le dispositif d'acheminement étant **caractérisé en ce que** le diamètre intérieur et le diamètre extérieur des éléments télescopiques (13) sont adaptés l'un à l'autre de telle sorte qu'ils présentent un ajustement glissant.

6. Utilisation selon au moins l'une quelconque des revendications précédentes, le dispositif d'acheminement étant **caractérisé en ce que** les éléments télescopiques (13) et la trémie de décharge (3) présentent sur leurs faces intérieures (14) respectivement au moins une bague d'étanchéité (16) dans la zone de leurs bords supérieurs (17), laquelle est disposée dans un évidement annulaire de la paroi intérieure respective (14).

7. Utilisation selon au moins l'une quelconque des revendications 1 à 5, le dispositif d'acheminement étant **caractérisé en ce que** le tube de trémie (12) et les éléments télescopiques (13) présentent respectivement au moins une bague d'étanchéité (16) dans la zone de leurs bords (18) inférieurs, laquelle est disposée dans un évidement annulaire des parois extérieures (15) respectives.

8. Utilisation selon au moins l'une quelconque des revendications précédentes, le dispositif d'acheminement étant **caractérisé en ce que** le tube de trémie (12) et les éléments télescopiques (13) présentent respectivement au moins une bague d'étanchéité (16) dans la zone de leurs bords inférieurs (18), laquelle est disposée dans un évidement annulaire des parois extérieures (15) respectives et les éléments télescopiques (13) et la trémie de décharge (3) présentent sur leurs faces intérieures (14) respectivement au moins une bague d'étanchéité (16) dans la zone de leurs bords (17) supérieurs, laquelle est disposée dans un évidement annulaire de la paroi intérieure (14) respective.

9. Utilisation selon au moins l'une quelconque des revendications précédentes, le dispositif d'acheminement étant **caractérisé en ce que** les éléments télescopiques (13) peuvent être étirés et poussés les uns dans les autres par une manette (5) qui est disposée sur la face extérieure (15) de la trémie de décharge (3).

10. Utilisation selon au moins l'une quelconque des revendications précédentes, le dispositif d'acheminement étant **caractérisé en ce que** la trémie de décharge (3) présente dans sa zone inférieure une embouchure (20) qui peut être amarrée au sabot de remplissage (23) de la presse à comprimés et présente un tube fourreau en gomme élastique.

11. Utilisation selon au moins l'une quelconque des revendications précédentes, le dispositif d'acheminement étant **caractérisé en ce que** le clapet de sortie (4) peut être tourné autour d'un axe (22) dans la trémie de décharge (3) et réglé avec un élément d'actionnement disposé en dehors de la trémie de décharge (3).

12. Utilisation selon au moins l'une quelconque des revendications précédentes, le dispositif d'acheminement étant **caractérisé en ce que** le clapet de sortie (4) est fermé à l'état emboîté des éléments télescopiques (13) et lors de l'étirement des éléments télescopiques (13) et est ouvert à l'état étiré des éléments télescopiques (13) lorsque l'embouchure (20) est amarrée au sabot de remplissage (23) de la trémie de décharge (3).
